# EUROPEAN PATENT SPECIFICATION

(11) **EP 2 009 309 B1**
(45) Date of publication and mention of the grant of the patent: **11.04.2012**
(21) Application number: 08159126.5
(22) Date of filing: 26.06.2008
(51) Int. Cl.: F16D 41/06

(54) **One way clutch**
Freilaufkupplung
Embrayage unidirectionnel

(30) Priority: 27.06.2007 TW 96210465 U
(43) Date of publication of application: 31.12.2008
(73) Proprietor: Thai Dieng Industry Co., Ltd., Tachia, Taichung (TW)
(72) Inventor: Chen, No, Taichung (TW)
(74) Representative: Anderson, James Edward George

(56) References cited:
- EP-A1- 0 731 277
- DE-A1- 10 039 140
- DE-A1- 19 951 389
- US-A- 2 835 364
- US-A- 3 877 555
- US-B1- 6 488 135

## Description

This invention relates to a roller bearing, more particularly to a roller bearing including a cage having two cage rings formed with retaining holes for holding end sections of urging members.

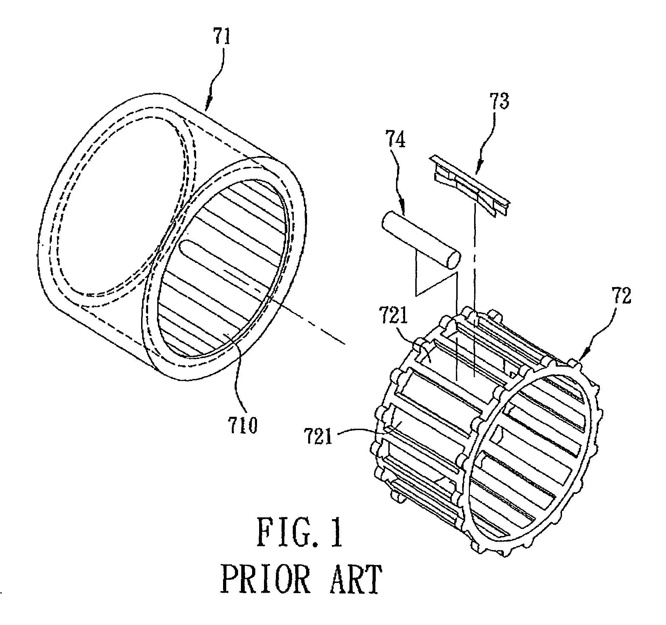

Fig. 1 illustrates a conventional unidirectional roller bearing that includes an outer race 71 formed with a plurality of inclined roller-driving surfaces 710, a cage 72 received in the outer race 71 and formed with a plurality of angularly displaced retaining spaces 721, a plurality of cylindrical rollers 74 received in the retaining spaces 721 and driven by the inclined roller-driving surfaces 710, a plurality of urging members 73 received in the retaining spaces 721 for urging the cylindrical rollers 74, and inner race (not shown) received in the cage 72. The inclined roller-driving surfaces 710 of the outer race 71 permit the inner race to be driven to co-rotate with the outer race 71 when the outer race 71 rotates in a first rotational direction, and to be not driven to co-rotate with the outer race 71 when the outer race 71 rotates in a second rotational direction opposite to the first rotational direction. During assembly of the unidirectional roller bearing, the urging members 73 are first pressed into the retaining spaces 721, and the rollers 74 are subsequently pressed into the retaining spaces 721. Since the urging members 73 are retained in the retaining spaces 721 in a press-fit engaging manner, they are likely to jump undesirably out of the retaining spaces 721 due to pressing action of the rollers 74 into the retaining spaces 721.

Therefore, an object of the present invention is to provide a roller bearing that can overcome the aforesaid drawback associated with the prior art.

DE 10039140 A1 discloses a roller bearing comprising an outer race, a roller holder surrounded by the outer race, an inner race surrounded by the roller holder, a plurality of columns interconnecting the outer and inner races and disposed angularly spaced apart from each other to define a plurality of pockets, a plurality of rollers received respectively in the pockets, and a plurality of spring members, each being received in a respective one of the pockets for urging a respective one of the rollers.

The invention provides a roller bearing according to independent claim 1. Preferred features of the invention are set out in the dependent claims.

According to this invention, there is provided a roller bearing that comprises: an outer race; a cage surrounded by the outer race and including two cage rings that are coaxially disposed and that are axially spaced apart from each other, and a plurality of pillars interconnecting the cage rings and displaced angularly from each other to define a plurality of roller-receiving spaces thereamong, each of the cage rings being formed with a plurality of retaining holes, each of which is in spatial communication with a respective one of the roller-receiving spaces, each of the retaining holes in one of the cage rings being axially aligned with a respective one of the retaining holes in the other of the cage rings; a plurality of primary rollers received in the roller-receiving spaces, respectively; and a plurality of urging members, each of which is received in a respective one of the roller-receiving spaces for urging a respective one of the primary rollers, and each of which extends into a respective axially aligned pair of the retaining holes in the cage rings so as to be retained between the cage rings.

Other features and advantages of the present invention will become apparent in the following detailed description of the preferred embodiment of this invention, with reference to the accompanying drawings, in which:
Fig. 1 is an exploded perspective view of a conventional unidirectional roller bearing;
Fig. 2 is an exploded perspective view of the preferred embodiment of a roller bearing according to this invention;
Fig. 3 is a sectional view of a cage of the preferred embodiment;
Fig. 4 is a sectional view taken along line IV-IV in Fig. 3;
Fig. 5 is a perspective view of an urging member of the preferred embodiment;
Fig. 6 is a radial sectional view of the preferred embodiment; and
Fig. 7 is an axial sectional view of the preferred embodiment.

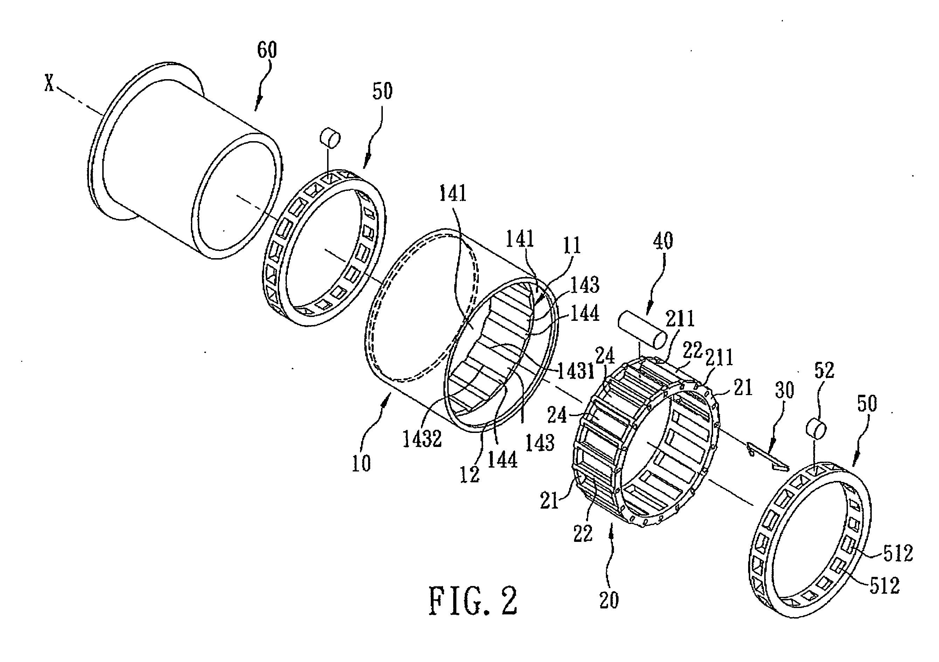

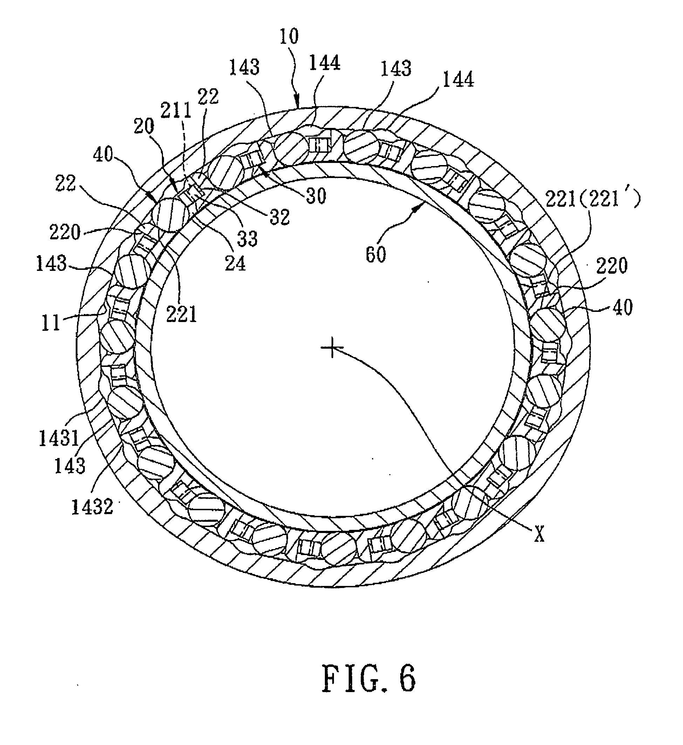

Figs. 2 and 6 illustrate the preferred embodiment of a roller bearing according to this invention. The roller bearing includes: an outer race 10; a cage 20 surrounded by the outer race 10 and including two cage rings 21 that are coaxially disposed and that are axially spaced apart from each other, and a plurality of pillars 22 interconnecting the cage rings 21 and displaced angularly from each other to define a plurality of roller-receiving spaces 24 thereamong, each of the cage rings 21 being formed with a plurality of retaining holes 211, each of which is in spatial communication with a respective one of the roller-receiving spaces 24, each of the retaining holes 211 in one of the cage rings 21 being axially aligned with a respective one of the retaining holes 211 in the other of the cage rings 21; a plurality of primary rollers 40 received in the roller-receiving spaces 24, respectively; and a plurality of urging members 30, each of which is received in a respective one of the roller-xeceiving spaces 24 for urging a respective one of the primary rollers 40, and each of which extends into a respective axially aligned pair of the retaining holes 211 in the cage rings 21 so as to be retained between the cage rings 21.

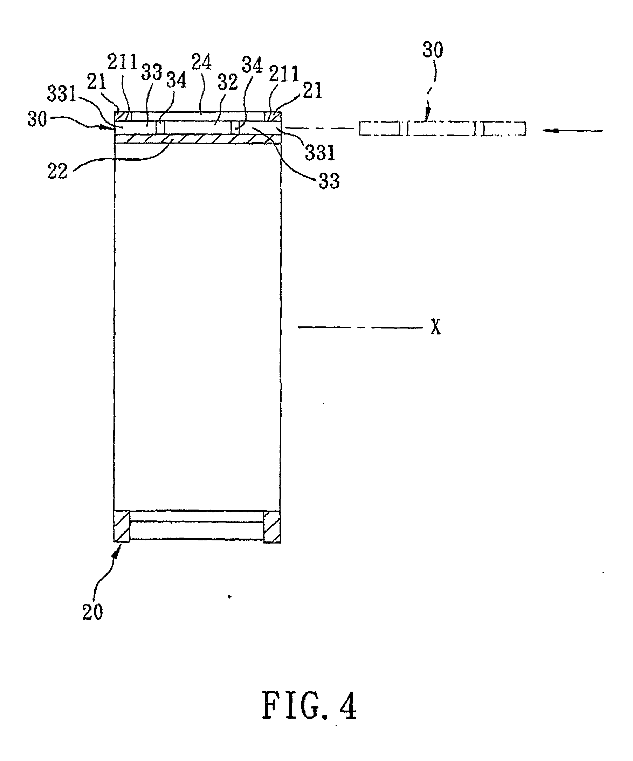

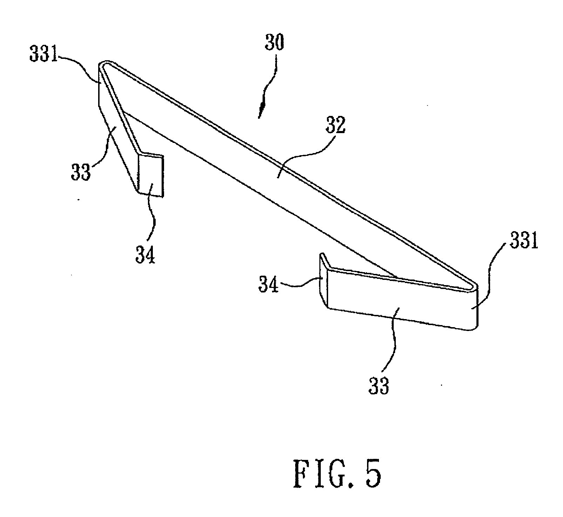

In this embodiment, each of the urging members 30 is in the form of a bent plate (see Figs. 4, 5 and 7) that has two opposite end sections 33 and a middle section 32 extending between the end sections 33. The end sections 33 are bent from the middle section 32 toward each other to define two folded ends 331 thereamong and to form two resilient arms for abutting resiliently against the respective one of the primary rollers 40. The folded ends 331 formed on the bent plate of each of the urging members 30 are received in the respective axially aligned pair of the retaining holes 211 in the cage rings 21, respectively. Each of the end sections 33 of the bent plate of each of the urging members 30 has a bent free end 34 that is bent therefrom toward the middle section 32 of the bent plate of the respective one of the urging members 30.

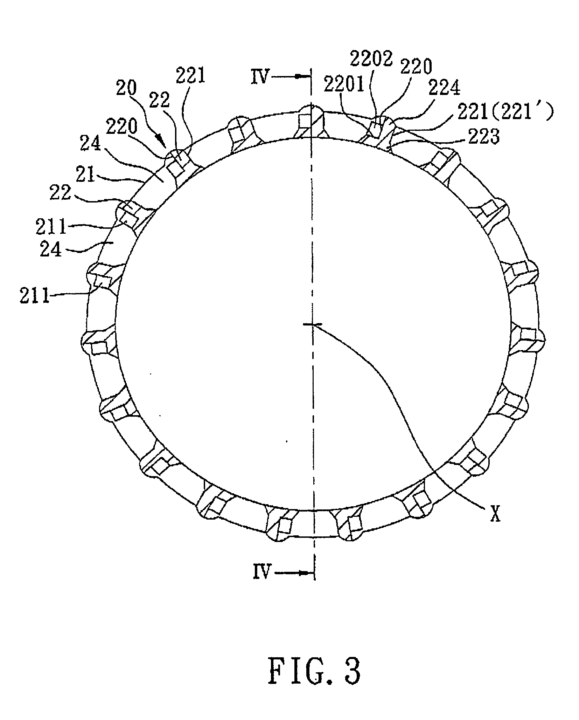

Referring to Fig. 3, in combination with Fig. 6, each of the pillars 22 has a spring-abutting side 220 having a generally L-shaped surface that defines a shoulder 2201 and a recess 2202. Each of the urging members 30 is received in the recess 2202 in a respective one of the pillars 22, and is seated on the shoulder 2201defined by the L-shaped surface of the spring-abutting side 220 of the respective one of the pillars 22. Each of the pillars 22 further has a roller-abutting side 221 opposite to the spring-abutting side 220, and includes an inner segment 223 and an outer segment 224 reduced in width between the roller-abutting side 221 and the spring-abutting side 220 from the inner segment 223 toward the outer race 10 to define the L-shaped surface at the spring-abutting side 220 and a bent surface 221' at the roller-abutting side 221 for guiding movement of a respective one of the primary rollers 40 therealong. The middle section 32 of the bent plate of each of the urging members 30 abuts against the spring-abutting side 220 of the respective one of the pillars 22.

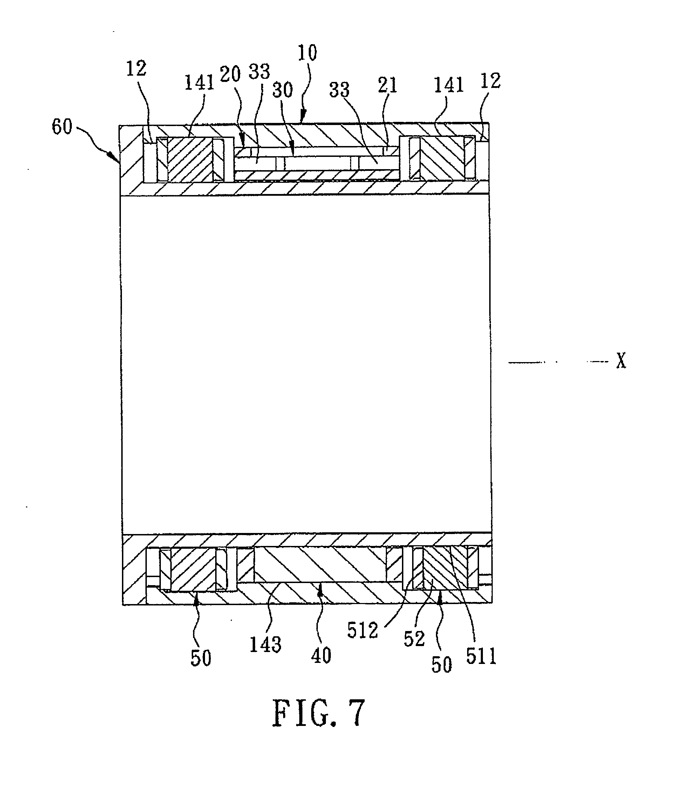

The outer race 10 has an annular inner protrusion 11 that protrudes inwardly therefrom and that is formed with a plurality of axially extending grooves 144 which are angularly displaced so as to define a plurality of roller-driving surfaces 143 thereamong for abutting against the primary rollers 40 (see Figs. 2 and 6), respectively. Each of the roller-driving surfaces 143 has opposite axially extending first and second sides 1431, 1432 (see Fig. 2) that differ from each other in terms of radial distance from an axis (X) of the outer race 10. The outer race 10 further has two opposite end flanges 12 that protrude inwardly and radially therefrom and that are respectively disposed at two opposite sides of the inner protrusion 11 to define two retaining spaces 141 threamong. Two auxiliary rings 50 are received in the retaining spaces 141, respectively. Each of the auxiliary rings 50 is formed with a plurality of roller-retaining holes 512. A plurality of auxiliary rollers 52 are retained in the roller-retaining holes 512 in the auxiliary rings 50, respectively, and are in rotational contact with the outer race 10 (see Figs. 2 and 7).

An inner race 60 extends into and through the outer race 10, the cage 20, and the auxiliary rings 50, and is in contact with the primary rollers 40 and the auxiliary rollers 52.

In this embodiment, the roller bearing is an unidirectional type roller bearing. In use, when the outer race 10 is driven by a driving unit (not shown) to rotate about the axis (X) thereof in a first rotational direction (not shown), the primary rollers 40 will be pushed by the roller-driving surfaces 143 to move against urging action of the urging members 30 until they are pressed tightly against the inner race 60 by the roller-driving surfaces 143 to permit the inner race 60 to be driven to co-rotate with the outer race 10. On the contrary, when the outer race 10 is driven to rotate in a second rotational direction opposite to the first rotational direction, the primary rollers 40 are urged by the urging members 30 to move along the roller-abutting sides 221 of the pillars 22, respectively, and are not pressed by the roller-driving surfaces 193 against the inner race 60, thereby permitting the inner race 60 to remain idle while the outer race 10 rotates in the second rotational direction.

During assembly, each of the urging members 30 is extended through the respective axially aligned pair of the retaining holes 211 in the cage rings 20 so that the middle and end sections 32, 33 of each of the urging members 30 are received in the respective roller-receiving space 24 and that the folded ends 331 are retained in the respective retaining holes 211 in the cage rings 20. The primary rollers 40 are subsequently pressed into the roller-receiving spaces 24 to be urged by the urging members 30, respectively. Since the folded ends 331 of the urging members 30 are retained in the retaining holes 211 in the cage rings 20, undesired removal of the urging members 30 from the roller-receiving spaces 24 during pressing of the primary rollers 40 into the roller-receiving spaces 24 can be prevented from occurring, thereby eliminating the aforesaid drawback associated with the prior art.

## Claims

1. A roller bearing comprising:
an outer race (10);
a cage (20) surrounded by said outer race (10) and including two cage rings (21) that are coaxially disposed and that are axially spaced apart from each other, and a plurality of pillars (22) interconnecting said cage rings (21) and displaced angularly from each other to define a plurality of roller-receiving spaces (24) thereamong, each of said cage rings (21) being formed with a plurality of retaining holes (211), each of which is in spatial communication with a respective one of said roller-receiving spaces (24), each of said retaining holes (211) in one of said cage rings (21) being axially aligned with a respective one of said retaining holes (211) in the other of said cage rings (21);
a plurality of primary rollers (40) received in said roller-receiving spaces (24), respectively; and
a plurality of urging members (30), each of which is received in a respective one of said roller-receiving spaces (24) for urging a respective one of said primary rollers (40), and each of which extends into a respective axially aligned pair of said retaining holes (211) in said cage rings (21) so as to be retained between said cage rings (21),
wherein each of said pillars (22) has a spring-abutting side (220) and a roller-abutting side (221) that is opposite to said spring-abutting side (220), and includes an inner segment (223) and an outer segment (224) reduced in width between said roller-abutting side (221) and said spring-abutting side (220) from said inner segment (223) toward said outer race (10) to define a bent surface (221') at said roller-abutting side (221) for guiding movement of a respective one of said primary rollers (40) therealong.

2. The roller bearing of claim 1, **characterized in that** each of said urging members (30) is in the form of a bent plate that has two opposite end sections (33) and a middle section (32) extending between said end sections (33), said end sections (33) being bent from said middle section (32) toward each other to define two folded ends (331) thereamong and to form two resilient arms for abutting resiliently against the respective one of said primary rollers (40), said folded ends (311) formed on said bent plate of each of said urging members (30) being received in the respective axially aligned pair of said retaining holes (211) in said cage rings (21), respectively.

3. The roller bearing of claim 2, further **characterized in that** each of said end sections (33) of said bent plate of each of said urging members (30) has a bent free end (34) that is bent therefrom toward said middle section (32) of said bent plate of the respective one of said urging members (30).

4. The roller bearing of any one of the previous claims, **characterized in that** said spring abutting side (220) of each of said pillars (22) has a generally L-shaped surface that defines a shoulder (2201) and a recess (2202), each of said urging members (30) being received in said recess (2202) in a respective one of said pillars (22) and being seated on said shoulder (2201) defined by said L-shaped surface of said spring-abutting side (220) of the respective one of said pillars (22).

5. The roller bearing of any one of the previous claims, **characterized in that** said outer race (10) has an annular inner protrusion (11) that protrudes inwardly therefrom and that is formed with a plurality of axially extending grooves (144) which are angularly displaced so as to define a plurality of roller-driving surfaces (143) thereamong for abutting against said primary rollers (40), respectively.

6. The roller bearing of claim 5, further **characterized in that** said outer race (10) further has two opposite end flanges (12) that protrude inwardly and radially therefrom and that are respectively disposed at two opposite sides of said inner protrusion (11) to define two retaining spaces (141) thereamong, said roller bearing further comprising a plurality of auxiliary rollers (52) and two auxiliary rings (50) received in said retaining spaces (141), respectively, each of said auxiliary rings (50) being formed with a plurality of roller-retaining holes (512), said auxiliary rollers (52) being retained in said roller-retaining holes (512) in said auxiliary rings (50), respectively, and being in rotational contact with said outer race (10).

7. The roller bearing of claim 6, further **characterized by** an inner race (60) extending into and through said outer race (10), said cage (20), and said auxiliary rings (50), and in contact with said primary rollers (40) and said auxiliary rollers (52).

## Patentansprüche

1. Walzenlager, umfassend:
einen äußeren Laufring (10);
einen Käfig (20), welcher von dem äußeren Laufring (10) umgeben ist und zwei Käfigringe (21) beinhaltet, die koaxial angeordnet und zueinander axial mit Abstand versehen sind, und eine Vielzahl von Streben (22), welche die Käfigringe (21) verbinden und gegeneinander winklig versetzt sind, um dazwischen eine Vielzahl von Walzen aufnehmenden Räumen (24) zu definieren, wobei jeder der Käfigringe (21) mit einer Vielzahl von Rückhaltelöchern (211) ausgebildet ist, von denen jedes in räumlicher Verbindung mit einem entsprechenden der Walzen aufnehmenden Räume (24) ist, wobei jedes der Rückhaltelöcher (211) in einem der Käfigringe (21) axial mit einem entsprechenden der Rückhaltelöcher (211) in dem anderen der Käfigringe (21) ausgerichtet ist;
eine Vielzahl von primären Walzen (40), welche jeweils in den Walzen aufnehmenden Räumen (24) aufgenommen sind; und
eine Vielzahl von Antriebsteilen (30), von denen jedes in einem entsprechenden der Walzen aufnehmenden Räumen (24) zum Antreiben einer entsprechenden der primären Walzen (40) aufgenommen ist, und von denen sich jedes in ein entsprechendes axial ausgerichtetes Paar der Rückhaltelöcher (211) in den Käfigringen (21) hineinerstreckt, um derart zwischen den Käfigringen (21) zurückgehalten zu werden,
wobei jede der Streben (22) eine Feder-Grenzseite (220) und eine der Feder-Grenzseite (220) gegenüberliegende Walzen-Grenzseite (221) hat und ein inneres Segment (223) und ein äußeres Segment (224), welches zwischen der Walzen-Grenzseite (221) und der Feder-Grenzseite (220) von dem inneren Segment (223) hin zu dem äußeren Laufring (10) eine verringerte Breite hat, beinhaltet, um eine gekrümmte Oberfläche (221') an der Walzen-Grenzseite (221) zum Führen von Bewegung einer entsprechenden der primären Walzen (40) daran entlang zu definieren.

2. Walzenlager nach Anspruch 1, **dadurch gekennzeichnet, dass** jedes der Antriebsteile (30) die Form einer gekrümmten Platte hat, die zwei gegenüberliegende Endabschnitte (33) und einen sich zwischen den Endabschnitten (33) erstreckenden Mittelabschnitt (32) hat, wobei die Endabschnitte (33) von dem Mittelabschnitt (32) zueinander hin gekrümmt sind, um dazwischen zwei gefaltete Enden (331) zu definieren und um zwei elastische Arme zum elastischen Angrenzen an die entsprechende der primären Walzen (40) auszubilden, wobei die gefalteten Enden (311), welche auf der gekrümmten Platte eines jeden der Antriebsteile (30) ausgebildet sind, jeweils in den entsprechenden axial ausgerichteten Paaren der Rückhaltelöcher (211) in den Käfigringen (21) aufgenommen werden.

3. Walzenlager nach Anspruch 2, weiterhin **gekennzeichnet dadurch, dass** jeder der Endabschnitte (33) der gekrümmten Platte eines jeden der Antriebsteile (30) ein gekrümmtes freies Ende (34) hat, welches von dort hin zu dem Mittelabschnitt (32) der gekrümmten Platte des jeweiligen Antriebsteils (30) gekrümmt ist.

4. Walzenlager nach einem der voranstehenden Ansprüche, **dadurch gekennzeichnet, dass** die Feder-Grenzseite (220) einer jeden der Streben (22) eine im Allgemeinen L-förmige Oberfläche hat, welche eine Leiste (2201) und eine Aussparung (2202) definiert, wobei jedes der Antriebsteile (30) in der Aussparung (2202) in der entsprechenden der Streben (22) aufgenommen wird und auf der durch die L-förmige Oberfläche der Feder-Grenzseite (220) der entsprechenden der Streben (22) definerten Leiste (2201) aufsitzt.

5. Walzenlager nach einem der voranstehenden Ansprüche, **dadurch gekennzeichnet, dass** der äußere Laufring (10) einen ringförmigen inneren Vorsprung (11) hat, welcher von diesem nach innen hervorsteht und der mit einer Vielzahl von sich axial erstreckenden Kerben (144), die winklig versetzt sind, so dass sie dazwischen eine Vielzahl von Walzen treibenden Oberflächen (143) zum jeweiligen Angrenzen an die primären Walzen (40) definieren, ausgebildet ist.

6. Walzenlager nach Anspruch 5, weiterhin **dadurch gekennzeichnet, dass** der äußere Laufring (10) weiterhin zwei gegenüberliegende Bünde (12) hat, welche nach innen und radial davon hervorstehen und welche jeweils an zwei gegenüberliegenden Seiten des inneren Vorsprungs (11) angeordnet sind, um dazwischen zwei Rückhalteräume (141) zu definieren, wobei das Walzlager weiterhin eine Vielzahl von Hilfswalzen (52) und zwei jeweils in den Rückhalteräumen (141) aufgenommene Hilfsringe (50) umfasst, wobei jeder der Hilfsringe (50) mit einer Vielzahl von Walzen zurückhaltenden Löchern (512) ausgebildet ist, wobei jede der Hilfswalzen (52) jeweils in den Walzen zurückhaltenden Löchern (512) in den Hilfsringen (50) zurückgehalten wird und in drehbaren Kontakt mit dem äußeren Laufring (10) ist.

7. Walzenlagern nach Anspruch 6, weiterhin durch einen inneren Laufring (40) **gekennzeichnet**, welcher sich hinein und durch den äußeren Laufring (10), den Käfig (20) und die Hilfsringe (50) erstreckt und in Kontakt mit den primären Walzen (40) und den Hilfswalzen (52) ist.

## Revendications

1. Roulement à rouleaux comprenant :
un chemin de roulement externe (10) ;
une cage (20) entourée par ledit chemin de roulement externe (10) et comprenant deux anneaux de cage (21) qui sont disposés de manière coaxiale et qui sont espacés de manière axiale l'un de l'autre, et une pluralité de piliers (22) interconnectant lesdits anneaux de cage (21) et déplacés de manière angulaire les uns par rapport aux autres afin de définir une pluralité d'espaces de réception de rouleau (24) parmi ces derniers, chacun desdits anneaux de cage (21) étant formé par une pluralité de trous de retenue (211), dont chacun est en communication spatiale avec un espace respectif desdits espaces de réception de rouleau (24), chacun desdits trous de retenue (211) dans l'un desdits anneaux de cage (21) étant aligné de manière axiale avec un trou respectif desdits trous de retenue (211) dans l'autre desdits anneaux de cage (21) ;
une pluralité de rouleaux principaux (40) reçus dans lesdits espaces de réception de rouleau (24), respectivement ; et
une pluralité d'éléments de poussée (30), dont chacun est reçu dans un espace respectif desdits espaces de réception de rouleau (24) pour pousser un rouleau respectif desdits rouleaux principaux (40), et dont chacun s'étend dans une paire respective axialement alignée desdits trous de retenue (211) dans lesdits anneaux de cage (21) afin d'être retenu entre lesdits anneaux de cage (21),
dans lequel chacun desdits piliers (22) a un côté de butée de ressort (220) et un côté de butée de rouleau (221) qui est opposé audit côté de butée de ressort (220), et comprend un segment interne (223) et un segment externe (224) réduit en largeur entre ledit côté de butée de rouleau (221) et ledit côté de butée de ressort (220), dudit segment interne (223) vers ledit chemin de roulement externe (10) afin de définir une surface courbée (221') au niveau dudit côté de butée de rouleau (221) pour guider le mouvement d'un rouleau respectif desdits rouleaux principaux (40) le long de cette dernière.

2. Roulement à rouleaux selon la revendication 1, **caractérisé en ce que** chacun desdits éléments de poussée (30) se présente sous la forme d'une plaque courbée qui a deux sections d'extrémité (33) opposées et une section centrale (32) s'étendant entre lesdites sections d'extrémité (33), lesdites sections d'extrémité (33) étant courbées à partir de ladite section centrale (32) les unes vers les autres afin de définir deux extrémités pliées (331) parmi ces dernières et afin de former deux bras élastiques pour venir en butée de manière élastique contre le rouleau respectif desdits rouleaux principaux (40), lesdites extrémités pliées (311) formées sur ladite plaque courbée de chacun desdits éléments de poussée (30) étant reçues dans la paire respective axialement alignée desdits trous de retenue (211) dans lesdits anneaux de cage (21), respectivement.

3. Roulement à rouleaux selon la revendication 2, **caractérisé en outre en ce que** chacune desdites sections d'extrémité (33) de ladite plaque courbée de chacun desdits éléments de poussée (30) a une extrémité libre courbée (34) qui est courbée à partir de ces dernières vers ladite section centrale (32) de ladite plaque courbée de l'élément respectif desdits éléments de poussée (30).

4. Roulement à rouleaux selon l'une quelconque des revendications précédentes, **caractérisé en ce que** ledit côté de butée de ressort (220) de chacun desdits piliers (22) a une surface généralement en forme de L qui définit un épaulement (2201) et un évidement (2202), chacun desdits éléments de poussée (30) étant reçu dans ledit évidement (2202) dans un pilier respectif desdits piliers (22) et étant installé sur ledit épaulement (2201) défini par ladite surface en forme de L dudit côté de butée de ressort (220) du pilier respectif desdits piliers (22).

5. Roulement à rouleaux selon l'une quelconque des revendications précédentes, **caractérisé en ce que** ledit chemin de roulement externe (10) a une saillie interne annulaire (11) qui fait saillie vers l'intérieur à partir de ce dernier et qui est formée à partir d'une pluralité de rainures s'étendant de manière axiale (144) qui sont déplacées de manière angulaire afin de définir une pluralité de surfaces d'entraînement de rouleau (143) parmi ces dernières pour venir en butée contre lesdits rouleaux principaux (40) respectivement.

6. Roulement à rouleaux selon la revendication 5, **caractérisé en outre en ce que** ledit chemin de roulement externe (10) a en outre deux rebords d'extrémité (12) opposés qui font saillie vers l'intérieur et radialement à partir de ce dernier et qui sont respectivement disposés au niveau de deux côtés opposés de ladite saillie interne (11) afin de définir deux espaces de retenue (141) parmi ces derniers, ledit roulement à rouleaux comprenant en outre une pluralité de rouleaux auxiliaires (52) et deux anneaux auxiliaires (50) reçus dans lesdits espaces de retenue (141), respectivement, chacun desdits anneaux auxiliaires (50) étant formé avec une pluralité de trous de retenue de rouleau (512), lesdits rouleaux auxiliaires (52) étant retenus dans lesdits trous de retenue de rouleau (512) dans lesdits anneaux auxiliaires (50), respectivement, et étant en contact rotatif avec ledit chemin de roulement externe (10).

7. Roulement à rouleaux selon la revendication 6, **caractérisé en outre par** un chemin de roulement interne (60) s'étendant dans et à travers ledit chemin de roulement externe (10), ladite cage (20) et lesdits anneaux auxiliaires (50), et en contact avec lesdits rouleaux principaux (40) et lesdits rouleaux auxiliaires (52).
